# EUROPÄISCHE PATENTANMELDUNG

(11) **EP 1 114 672 A2**
(43) Veröffentlichungstag der Anmeldung: **11.07.2001**
(21) Anmeldenummer: 00128387.8
(22) Anmeldetag: 22.12.2000
(51) Int. Cl.: B01F 7/24, C12G 1/02

(54) **Gärtank**

(30) Priorität: 07.01.2000 CH 262000
(71) Anmelder: Hartmann, Jörg, 5213 Villnachern (CH)
(72) Erfinder: Hartmann, Jörg, 5213 Villnachern (CH)
(74) Vertreter: Blum, Rudolf Emil Ernst

(57) **Zusammenfassung**

Der Gärtank besitzt ein Rührwerk (5), an welchem mindestens eine Wendel (9, 10, 11) mit im wesentlichen vertikaler Wendelachse (7) angeordnet ist. Ein Motor (6) ist vorgesehen, um die Wendeln (9, 10, 11) zum Drehen um die Wendelachse (7) anzutreiben. Durch die im wesentlichen vertikale Anordnung der Wendelachse wird beim Drehen der Wendeln (9, 10, 11) das Gärgut (3, 4) nach unten gedrückt. Damit wird die Bildung eines Trester- bzw. Maischenkuchens verhindert.

## Beschreibung

Die Erfindung betrifft einen Gärtank und ein Verfahren zu dessen Betrieb gemäss Oberbegriff der unabhängigen Ansprüche.

Bei der traditionellen Maischengärung tritt das Problem auf, dass in gewissen Herstellungsphasen an der Oberfläche des Gärguts ein Trester- bzw. Maischenkuchen schwimmt, der im wesentlichen aus Festteilen besteht, die aufgrund ihres geringen spezifischen Gewichts oder durch Gärungsgase nach oben gedrängt werden. Die Bildung eines solchen Maischenkuchens ist unerwünscht, da er einen guten Kontakt zwischen Feststoffanteilen und flüssiger Phase des Gärguts behindert, zur Schimmelbildung neigt oder austrocknen kann.

Um die Bildung des Maischenkuchens zu verhindern, können zum Umrühren Stössel verwendet werden, die von oben durch den Maischekuchen gedrückt werden. Hierzu wird jedoch viel Platz oberhalb des Gärtanks benötigt. Ausserdem können die Stössel, insbesondere bei automatischem Betrieb, eine vollständige Auflösung des Maischenkuchens nicht immer gewährleisten.

Es stellt sich deshalb die Aufgabe, einen Gärtank bzw. ein Verfahren der eingangs genannten Art bereitzustellen, die diese Nachteile möglichst vermeiden.

Diese Aufgabe wird vom Gärtank und dem Betriebsverfahren gemäss den unabhängigen Ansprüchen gelöst.

Erfindungsgemäss besitzt das Rührwerk also eine Wendel mit einer im wesentlichen vertikalen Wendelachse. Ferner ist ein Motor vorgesehen, um die Wendel um die Wendelachse zu drehen. Durch die im wesentlichen vertikale Anordnung der Wendelachse drückt die Wendel beim Drehen das Gärgut nach unten. Im Gegensatz zu einem Gärtank mit Stösseln benötigt eine derartige Vorrichtung nur wenig Platz.

Vorzugsweise sind mindestens zwei radial beabstandete, konzentrische Wendel vorgesehen. Dadurch kann auch bei kleiner Wendelfläche ein grosser Teil des Maischenkuchens erfasst werden. Eine Reduktion der Wendelfläche ist sinnvoll, da dadurch die Reibung und die mechanische Belastung des Gärguts verringert wird.

Das Rührwerk kann eine zentrale und mindestens eine äussere Wendel aufweisen, die umgekehrten Drehsinn besitzen. Beim Drehen des Rührwerks drückt die äussere Wendel den Maischenkuchen nach unten, während die innere Wendel das Gärgut nach oben drängt, so dass es zu einer Zirkulationsbewegung kommt, die die Durchmischung verbessert.

Sind mehrere Rührwerke vorgesehen, so sind deren Achsen vorzugsweise gekippt, so dass es im Gärgut zu einer Umlaufbewegung kommt. Dadurch wird auch der Maischenkuchen aus den Bereichen, die von den Wendeln nicht direkt erfasst werden, in deren Wirkbereich geschwemmt.

Das Rührwerk wird vorzugsweise in Intervallen betrieben. Dadurch wird dank der Trägheit des Gärguts eine grosse Relativgeschwindigkeit zwischen Gärgut und Wendel gewährleistet. Ausserdem wird eine unerwünschte mechanische Zerkleinerung der Feststoffanteile reduziert. Dabei sollte die Wendel schneller beschleunigt als abgebremst werden, so dass verhindert wird, dass nach einem Stoppen der Wendel das träge, sich noch bewegenden Gärgut nach oben gedrängt wird.

Die Länge und/oder Häufigkeit der Betriebsintervalle kann automatisch abhängig vom Zuckergehalt des Gärguts gewählt werden. Dadurch wird eine vollautomatische Gärung möglich.

Die Erfindung eignet sich besonders für die Verarbeitung von Weintrauben und Früchten.

Weitere bevorzugte Ausführungen ergeben sich aus den abhängigen Ansprüchen sowie aus der nun folgenden Beschreibung anhand der Figuren. Dabei zeigen:
Fig. 1 eine erste Ausführung eines erfindungsgemässen Gärtanks, wobei der Tankbehälter im Schnitt und das Rührwerk in Seitenansicht dargestellt ist,
Fig. 2 einen Schnitt entlang Linie II-II von Fig. 1,
Fig. 3 eine zweite Ausführung eines erfindungsgemässen Gärtanks,
Fig. 4 eine dritte Ausführung eines erfindungsgemässen Gärtanks,
Fig. 5 einen Schnitt entlang Linie V-V von Fig. 4 und
Fig. 6 den Öchslegehalt, die Temperatur und die Betriebsparameter bei einer Gärung von Rotwein.

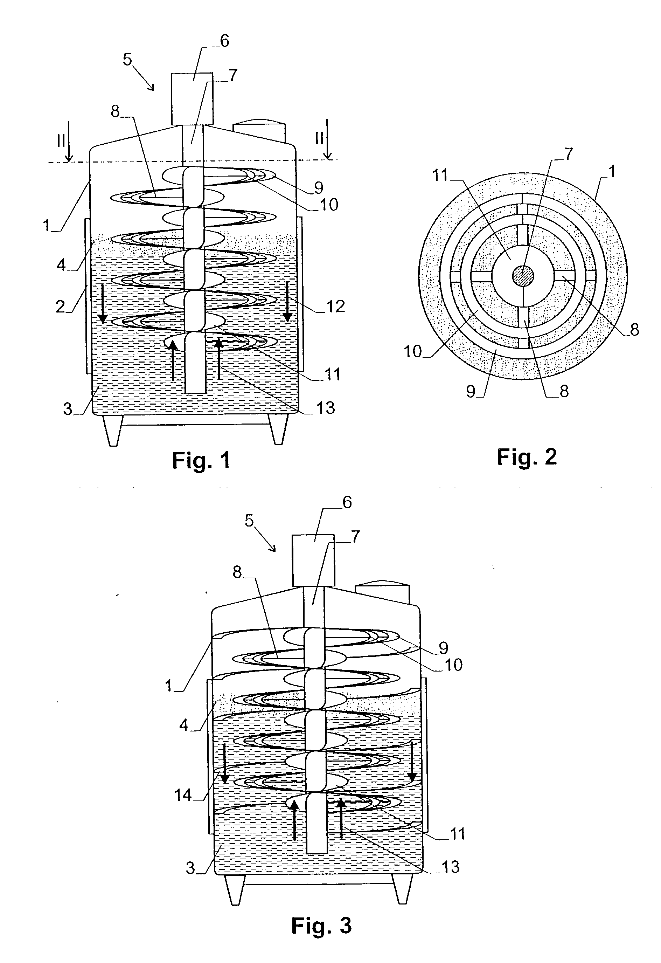

Der Gärtank gemäss Fig. 1 und 2 besitzt ein Gehäuse 1, welches z.B. aus rostfreiem Stahl oder einem anderen geeigneten Material besteht. Aussen am Gehäuse 1 ist ein Kühl- und Heizmantel 2 angeordnet, um das Gärgut zu kühlen oder zu wärmen.

Das Gärgut besteht aus einer flüssigen Phase 3 und einem Festkörperanteil 4. Letzterer sammelt sich, wie eingangs erwähnt, als Maischenkuchen an der Oberfläche an, wenn das Gärgut nicht regelmässig durchmischt wird.

Zum Durchmischen des Gärguts ist ein Rührwerk 5 vorgesehen. Dieses besitzt einen elektrischen Motor 6 mit elektronischer Steuerung, der eine vertikale Achse 7 antreibt. An der Achse 7 sind in der vorliegenden Ausführung über eine geeignete Zahl von Streben 8 insgesamt drei, radial voneinander beabstandete Wendel 9, 10 und 11 befestigt. Jede Wendel besteht aus einem helixförmig angeordneten Blechstreifen. Eine typische Ganghöhe beträgt etwa 0.5 m, der Durchmesser der äussersten Wendel z.B. 1.4 m bei einem Tankdurchmesser von 1.6 m.

Die beiden äusseren Wendel 9, 10 verlaufen parallel zueinander und besitzen den gleichen Drehsinn. Die zentrale Wendel 11 besitzt im Vergleich zu den äusseren Wendeln umgekehrten Drehsinn. Der Motor 6 dreht sich im Vorwärtsbetrieb so, dass die äusseren Wendel 9, 10 den Maischenkuchen 4 nach unten drücken, während die innere Wendel das Gärgut nach oben drängt, wie dies durch Pfeile 12 bzw. 13 dargestellt ist. Dadurch wird auch eine vertikale Zirkulation im Gärgut erzeugt.

Die Verwendung zweier getrennter äusserer Wendel 9, 10 hat den Vorteil, dass die Reibungsverluste reduziert werden und dass die (unerwünschte) mechanische Beanspruchung der Maische geringer ist. Damit ein ausreichender Teil des Maischenkuchens erfasst wird, ohne dass Reibung und Zerkleinerung zu gross werden, sollten im Querschnitt des Gärtanks die Wendeln 9, 10 insgesamt eine Fläche zwischen 10% und 50%, möglichst zwischen 25% und 35%, der Querschnittfläche des Gärtanks bedecken.

Um den Maischenkuchen nach unten zu drücken, muss die Umlaufgeschwindigkeit des Gärguts kleiner sein als jene des Rührwerks. Um dies zu gewährleisten, wird das Rührwerk intervallweise betrieben. Zu Beginn eines Betriebsintervalls wird es schnell beschleunigt, so dass das Gärgut wegen seiner Trägheit praktisch ruht, während das Rührwerk bereits eine oder zwei Drehungen durchgeführt und somit den Maischekuchen entsprechend um 0.5 bis 1.0 Meter nach unten gedrückt hat. Nach z.B. 10 Sekunden wird das Rührwerk wieder abgebremst, wobei jedoch die Abbremsung viel langsamer als die Beschleunigung erfolgt um zu verhindern, dass das Gärgut aufgrund seiner Trägheit eine höhere Geschwindigkeit erreicht als die Wendel.

Fig. 3 zeigt eine zweite Ausführung des erfindungsgemässen Gärtanks. Dieser entspricht in seinem Aufbau im wesentlichen jenem gemäss Fig. 1 und 2. Er besitzt jedoch zusätzlich einen wendelförmigen Stator 14, der fest am Gehäuse 1 angeordnet ist. In Fig. 3 ist nur die Hälfte des Stators 14 zu sehen, da er und das Gehäuse 1 im Schnitt dargestellt sind.

Der Stator 14 besitzt im Vergleich zu den äusseren Wendeln 9, 10 umgekehrten Drehsinn und verstärkt deren Wirkung: Wenn sich das Gärgut 3, 4 in einem Betriebsintervall des Rührwerks 5 mitzudrehen beginnt, so wird es im Randbereich durch den Stator 14 nach unten gedrückt.

Der Stator 14 verbessert auch die Wärmeübertragung zwischen dem Gärgut und dem aussenliegenden Kühl-bzw. Heizmantel 2.

In den Ausführungen nach Fig. 1 - 3 ist der Gärtank zylindrisch und das Rührwerk 5 ist konzentrisch in der Mitte des Gehäuses 1 angeordnet. Es sind jedoch auch andere Geometrien denkbar.

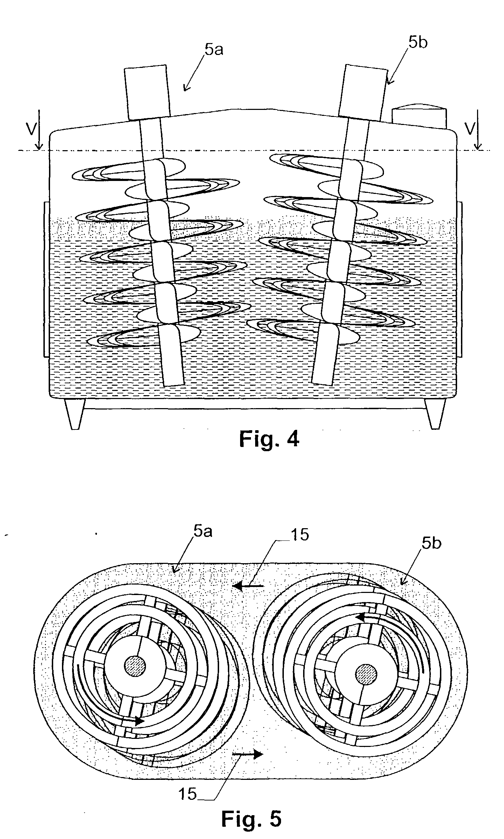

So zeigen Fig. 4 und 5 einen Gärtank mit länglichem Querschnitt. Damit das gesamte Gärgut gemischt werden kann, sind zwei gleichlaufende Rührwerke 5a, 5b vorgesehen, deren Achsen schräg zur Vertikalen stehen. Dies hat den Vorteil, dass eine Umlaufbewegung im Tank erzeugt wird, wie sie mit den Pfeilen 15 in Fig. 5 angedeutet ist. Somit können alle Teile des Maischenkuchens früher oder später von den Rührwerken erfasst und nach unten gedrückt werden.

Die vorliegende Erfindung erlaubt es, den Gärungsprozess vollautomatisch zu steuern, da eine reproduzierbare und zuverlässige Mischung des Gärguts möglich ist.

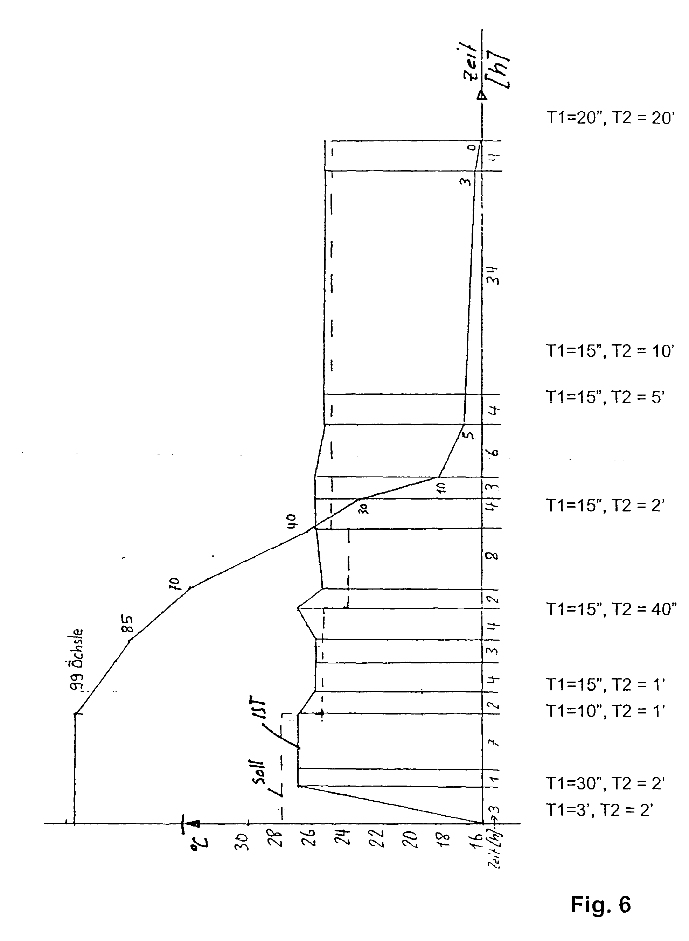

Fig. 6 zeigt das Beispiel einer Maischengärung von Rotwein mit dem Öchslegrad, der Soll- und der Ist-Temperatur. Zusätzlich sind die Betriebsparameter T1 und T2 für das Rührwerk dargestellt, wobei T1 die Länge der Betriebsintervalle und T2 der Abstand zwischen aufeinanderfolgenden Betriebsintervallen ist.

Im dargestellten Prozess wird das Gärgut in einer ersten Phase von z.B. 11 Stunden erwärmt bzw. warm gehalten (Verweilzeit), während welcher noch keine Gärung einsetzt. In dieser Zeit wird das Rührwerk oft und relativ lange betrieben, um das Gärgut gut zu durchmischen. Das Gärgut kann auch extern in einem Durchlaufverfahren auf die gewünschte Starttemperatur erwärmt und erst dann in den Tank eingefüllt werden.

Dann wird durch Zugabe von Hefe die Gärung eingeleitet. Durch die CO₂-Bildung erhalten die leichten Teile, wie z.B. die Beerenhaut, nun Auftrieb, so dass in regelmässigen Abständen von 40 Sekunden bis 2 Minuten die Rührwerke während z.B. 15 Sekunden in Vorwärtsrichtung betrieben werden, um eine Abwärtsbewegung der aufsteigenden Teile zu bewirken.

Nach Abklingen der Gärung kann der Abstand zwischen den Betriebsintervallen erhöht werden, da die CO₂-Bildung nachlässt. Die Temperatur kann in dieser Zeit, je nach Wunsch, nochmals angehoben werden. Sobald der Zuckergehalt etwa 0 ist, ist die Gärung beendet und der Tank kann in die Pressen entleert werden. Weil die Gärung in allen Teilen im Tank gleichmässig stattfindet, ist die Umwandlung von Zucker in Alkohol überall gleichzeitig fertig.

Wie aus Fig. 6 ersichtlich, ist die Länge T1 der Betriebsintervalle und deren Abstand T2 in erster Linie vom Zuckergehalt des Gärguts bzw. von dessen zeitlicher Ableitung abhängig. Somit kann die Steuerung der Parameter T1 und T2 automatisch erfolgen, indem der Zuckergehalt in regelmässigen Abständen von einem Sensor gemessen wird. Die Messung des Zuckergehalts erfolgt vorzugsweise automatisch, sie kann aber auch manuell durchgeführt werden.

Je nach Anforderung kann auch die Drehrichtung des Rührwerks umgekehrt werden. Dies kann insbesondere dann sinnvoll sein, wenn sich gegen Ende des Prozesses die Feststoffe abzusenken beginnen.

Die Zahlenwerte in Fig. 6 können von Gärgut zu Gärgut variieren und sind auch der Geometrie des Gärbehälters anzupassen.

Die obigen Ausführungsbeispiele können in verschiedenster Weise geändert werden, um den jeweiligen Anforderungen Rechnung zu tragen.

In der Gärtanks gemäss Fig. 1 - 5 sind z.B. jeweils pro Rührwerk drei Wendel vorgesehen. Es ist auch denkbar, Rührwerke mit mehr oder weniger als drei Wendeln zu verwenden. Insbesondere bei kleineren Rührwerken kann z.B. die zentrale Wendel 11 entfallen. Vorzugsweise ist aber zumindest eine Wendel beabstandet von der Achse 7 angeordnet, da sie so auf einen grösseren Teil des Maischenkuchens wirken kann.

In den obigen Beispielen wurden Tanks mit rundem und länglichem Querschnitt beschrieben. Es können jedoch auch Tanks mit anderen Querschnitten verwendet werden, wobei eine jeweils entsprechende Zahl von Rührwerken einzusetzen ist. Die Rührwerke sind so anzuordnen, dass der aufsteigende Trester- bzw. Maischenkuchen feucht bleibt und die Schimmelbildung vermieden wird.

In den obigen Beispielen sind die Achsen 7 der Rührwerke jeweils im Deckel der Tanks gelagert. Es kann jedoch zusätzlich oder alternativ auch eine Lagerung im Bodenbereich der Tanks vorgesehen sein.

Die vorliegende Erfindung erlaubt es, den Gärverlauf automatisch zu kontrollieren und zu optimieren, was die Qualität des Endprodukts verbessert und den Aufwand reduziert. Insbesondere ergibt sich ein Farbstoffgewinn und viele wichtige Inhaltsstoffe gelangen vom Festkörperanteil in die flüssige Phase. Dank der erfindungsgemässen Rührwerke benötigen die Gärtanks nur wenig Platz. Ferner können die Tanks auch für andere Zwecke als zur Maischengärung verwendet werden, z.B. als Rührtanks oder zur Maischenerwärmung.

Da die Rührwerke ihre Wirkung entlang ihrer ganzen Länge entfalten, funktionieren die Gärtanks auch dann noch zuverlässig, wenn sie nur teilweise gefüllt sind.

## Patentansprüche

1. Gärtank für die Maischengärung eines Gärguts (3, 4) mit mindestens einem Rührwerk (5) zum Lösen eines an der Oberfläche des Gärguts sich sammelnden Maischenkuchens (4), dadurch gekennzeichnet, dass das Rührwerk (5) mindestens eine Wendel (9, 10, 11) mit einer im wesentlichen vertikalen Wendelachse (7) aufweist, und einen Motor (6), um die Wendel (9, 10, 11) zum Drehen um die Wendelachse (7) anzutreiben.

2. Gärtank nach Anspruch 1, dadurch gekennzeichnet, dass das Rührwerk (5) mindestens einen radial beabstandet von der Wendelachse (7) angeordneten Wendel aufweist, und insbesondere zwei radial von der Wendelachse und voneinander beabstandete, konzentrisch angeordnete Wendel (9, 10, 11) aufweist.

3. Gärtank nach Anspruch 2, dadurch gekennzeichnet, dass das Rührwerk eine zentrale Wendel (11) und mindestens eine äussere Wendel (9, 10) aufweist, wobei die zentrale Wendel (11) umgekehrten Drehsinn zur äusseren Wendel (9, 10) aufweist, und dass der Motor (6) ausgestaltet ist zur Erzeugung einer Drehbewegung derart, dass die äussere Wendel (9, 10) den Maischenkuchen nach unten drückt während die innere Wendel (11) das Gärgut nach oben drängt.

4. Gärtank nach einem der vorangehenden Ansprüche, dadurch gekennzeichnet, dass er um das Rührwerk (5) herum einen wendelförmigen Stator (14) aufweist, der umgekehrten Drehsinn zum äussersten Wendel (9) des Rührwerks aufweist, und insbesondere dass ausserhalb des Stators (14) ein Kühl- und/oder Heizmittel (2) angeordnet ist.

5. Gärtank nach einem der vorangehenden Ansprüche, dadurch gekennzeichnet, dass er zylinderförmig ist und genau ein im wesentlichen konzentrisch in ihm angeordnetes Rührwerk (5) mit vertikaler Wendelachse (7) aufweist.

6. Gärtank nach einem der Ansprüche 1 bis 4, dadurch gekennzeichnet, dass er mehrere Rührwerke (5a, 5b) aufweist, deren Wendelachsen zum Erzeugen einer Umlaufbewegung des Gärguts aus der Vertikalen gekippt sind.

7. Gärtank nach einem der vorangehenden Ansprüche, dadurch gekennzeichnet, dass der Motor (6) eine Antriebssteuerung aufweist, welche ausgestaltet ist zum intervallweisen Betrieb des Motors, und
insbesondere dass die Antriebssteuerung ausgestaltet ist, um den Motor (6) schneller zu beschleunigen als abzubremsen, derart, dass aufgrund der Trägheit des Gärguts beim Anfahren der Maischekuchen mehr abgesenkt wird als dass er beim Bremsen angehoben wird.

8. Gärtank nach einem der vorangehenden Ansprüche, dadurch gekennzeichnet, dass im Querschnitt des Gärtanks die Wendel bzw. Wendeln (9, 10, 11) insgesamt eine Fläche zwischen 10% und 50%, vorzugsweise zwischen 25% und 35%, der Querschnittfläche des Gärtanks bedecken.

9. Verfahren zum Betrieb des Gärtanks nach einem der vorangehenden Ansprüche, dadurch gekennzeichnet, dass das Rührwerk (5) in Betriebsintervallen (Tl) intervallweise betrieben wird.

10. Verfahren nach Anspruch 9, dadurch gekennzeichnet, dass das Rührwerk (5) zu Beginn jedes Betriebsintervalls (T1) schneller beschleunigt wird, als dass es am Ende des Betriebsintervalls abgebremst wird, derart, dass aufgrund der Trägheit des Gärguts beim Anfahren der Maischekuchen mehr abgesenkt wird als dass er beim Bremsen angehoben wird.

11. Verfahren nach einem der Ansprüche 9 oder 10, dadurch gekennzeichnet, dass der Zuckergehalt des Gärguts gemessen und die Länge (T1) und/oder der Abstand (T2) der Betriebsintervalle automatisch abhängig vom Zukkergehalt gewählt werden.

12. Verwendung der Vorrichtung und des Verfahrens nach einem der vorangehenden Ansprüche zur Herstellung von Wein oder Apfelwein, insbesondere Rotwein, mittels Maischengärung.
